**Europäisches Patentamt**

**European Patent Office**

**Office européen des brevets**

(19)

(11) Veröffentlichungsnummer : **0 402 565 B1**

(12)

# EUROPÄISCHE PATENTSCHRIFT

(45) Veröffentlichungstag der Patentschrift :
**01.07.92 Patentblatt 92/27**

(51) Int. Cl.$^5$ : **G01C 19/72**

(21) Anmeldenummer : **90102528.8**

(22) Anmeldetag : **09.02.90**

(54) **Verfahren zur Selbstkorrektur eines Faserkreisels mit 3x3-Koppler.**

(30) Priorität : **10.06.89 DE 3919060**

(43) Veröffentlichungstag der Anmeldung :
**19.12.90 Patentblatt 90/51**

(45) Bekanntmachung des Hinweises auf die
Patenterteilung :
**01.07.92 Patentblatt 92/27**

(84) Benannte Vertragsstaaten :
**FR GB IT**

(56) Entgegenhaltungen :
**US-A- 4 440 498**
**US-A- 4 479 715**

(73) Patentinhaber : **Messerschmitt-Bölkow-Blohm
Gesellschaft mit beschränkter Haftung
Robert-Koch-Strasse
W-8012 Ottobrunn (DE)**

(72) Erfinder : **Bühler, Wolfhardt
Feldbergstrasse 84
W-8000 München 82 (DE)**
Erfinder : **Poisel, Hans, Dr.
Neustädter Strasse 6
W-8060 Dachau (DE)**
Erfinder : **Trommer, Gert, Dr.
Connollystrasse 16
W-8000 München 40 (DE)**

EP 0 402 565 B1

Jouve, 18, rue Saint-Denis, 75001 PARIS

## Beschreibung

Die Erfindung bezieht sich auf ein Verfahren zur Selbstkorrektur eines Faserkreisels mit 3x3-Koppler gemäß dem Gattungsbegriff des Anspruchs 1.

Durch die US-A-4 440 498 ist ein Faserkreisel mit 3x3-Koppler bekannt, der mittels des 3x3-Kopplers nahe am Quadraturpunkt arbeitet, ohne daß hierzu ein Modulator erforderlich ist. Weiterhin ist aus der US-A-4 479 715 ein Faserkreisel bekannt, bei welchem die Drehrate durch Quotientenbildung aus den Signalen zweier Fotodioden abgeleitet wird. Dieses Signalausweteverfahren hat den Vorteil, daß sich hierbei die Lichtintensität der Lichtquelle herauskürzt und deren Fluktuationen keinen Einfluß auf das Meßergebnis haben. Zusätzlich kürzen sich Fluktuationen der Dämpfung von Faserspule und von den Spulenspleißen heraus.

Durch die Anmelderin selbst ist ein Verfahren bekanntgeworden, das es erlaubt, trotz unbekannter Fluktuationen der Polarisationseigenschaften von Faserspule und Spulenspleißen ein genaues Sagnac-Signal zu ermitteln.

Bekanntlich lassen Faserkreisel mit 3x3-Koppler aufgrund ihres Aufbaus prinzipiell keinen Betrieb mit reziprokem Lichtweg zu. Umweltbedingte Fluktuationen - beispielsweise durch Temperatur, Druck etc. - der Polarisations-Übertragungseigenschaften der Faserspule äußern sich in einer Nullpunktdrift und in einer Skalenfaktordrift des Kreiselsignals. Die Nullpunktfehler lassen sich durch Verwendung unpolarisierten Lichtes vermeiden, dagegen bleiben Skalenfaktoränderungen, welche von Kontrastvariationen des Interferenzsignals herrühren bestehen. Entsprechend der von der Anmelderin schon gegebenen Lehre lassen sich diese Skalenfaktoränderungen berücksichtigen, indem die Informationen bzw. die Signale $P_1$, $P_2$, $P_3$, der drei Detektordioden $D_1$, $D_2$, $D_3$ so ausgewertet werden, daß die drei Unbekannten "Sagnac-Phase, Kontrast und Intensität der Lichtquelle" in eindeutiger Weise folgen.

Nun tritt aber hier folgendes Problem auf:
in dem vorbeschriebenen Verfahren sind die drei Detektorsignale $P_1$, $P_2$, $P_3$ Voraussetzung für die Signalauswertung, für welche bei unpolarisiertem Licht jeweils die Beziehung gilt:

$$P_1 = v \cdot D \cdot I \quad (1)$$
$$P_2 = v (A + kB \cdot \cos(\Phi - C)) \, ds \cdot I \quad (2)$$
$$P_3 = v (A + kB \cdot \cos(\Phi + c)) \, ds \cdot I \quad (3)$$

Hierbei sind v ein Konvertierungsfaktor zur Beschreibung des Wirkungsgrades der Fotodioden, I die Intensität der Lichtquelle L; A, B, C, D sind konstante Koeffizienten, die aus den Übertragungseigenschaften des 3x3-Kopplers resultieren; k ist der Kontrastfaktor des Interferenzsignals, herrührend von den Polarisationseigenschaften der Faserspule; ds ist der Dämpfungsfaktor, welcher die Dämpfung der Faserspule incl. Spulenspleißen beinhaltet. Speziell muß die Dämpfung ds bekannt sein, da dieser Faktor in der Signalauswertung des vorbeschriebenen Verfahrens der Anmelderin explizit auftaucht:

$$\frac{P_2 - P_3}{P_2 + P_3 - 2A/D \, ds \cdot P_1} \cdot \cot C = \tan \Phi \quad (4)$$

Eine Bestimmung der Sagnac-Phase und damit der gesuchten Drehrate erfordert daher die Kenntnis des Dämpfungsfaktors ds. Nun ist es aber Voraussetzung eines Faserkreisels für seinen technischen Einsatz, daß er eine Lebensdauer in der Größenordnung von 10 bis 20 Jahren aufweist.

In diesen Zeiträumen jedoch kann sich die Dämpfung der Faserspule durch zunehmende Microbending- und Spleiß-Verluste ändern. Im Falle eines Einsatzes solch eines Faserkreisels nach mehreren Jahren Lagerzeit wird sich daher der Dämpfungskoeffizient ds in unbekannter Weise verändert haben. Eine exakte Bestimmung der Drehrate ist damit nicht mehr sichergestellt.

Der Erfindung liegt die Aufgabe zugrunde, diese vorbeschriebenen Nachteile zu beseitigen und ein Verfahren der eingangs genannten Art aufzuzeigen, mit dem der Dämpfungsfaktor ds exakt ermittelt werden kann.

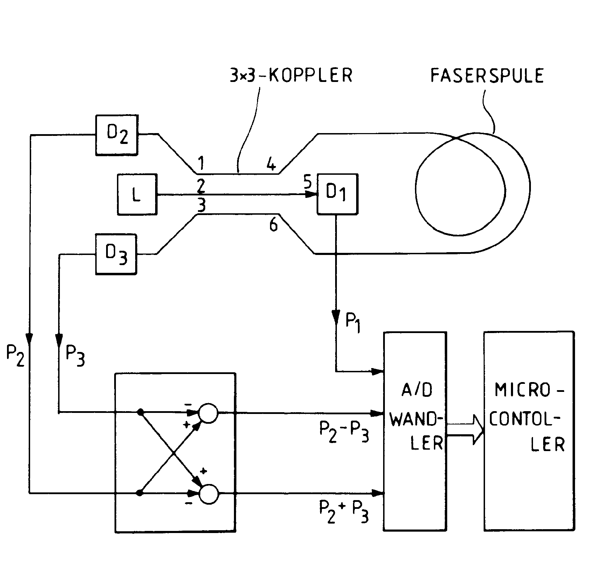

Diese Aufgabe wird durch die im Anspruch 1 aufgezeigten Maßnahmen in überraschend einfacher Weise gelöst. In den Unteransprüchen sind Weiterbildungen und Ausgestaltungen angegeben und in der nachfolgenden Beschreibung ist ein Ausführungsbeispiel erläutert. Die Figur zeigt den Faserkreiselaufbau in schematischer Darstellung.

Auf dem vorstehend skizzierten und von der Anmelderin bereits vorgeschlagenen Verfahren aufbauend, läßt sich eine unbekannte Änderung der Faserspulendämpfung wie nachstehend ausgeführt ermitteln:
Solange der Faserkreisel sich in Ruhelage befindet, weiß man, daß die Drehrate gleich Null ist. Damit ist die Sagnac-Phase $\Phi$ ebenfalls gleich Null und daher keine Unbekannte mehr. Also kann man den Dämpfungskoeffizienten ds als Unbekannte betrachten und berechnen. Allerdings läßt sich dies zwar für jeden beliebigen Wert der Saganc-Phase $\Phi$ durchführen, nur nicht für die Phase $\Phi = 0$, da in diesem Fall die Gleichung (4) für ds unbestimmt ist.

Nunmehr greift hier die Erfindung ein, die eine Selbsteichprozedur kurz vor dem Einsatz des Faserkreisels nach einer Lagerzeit vorschlägt, die wie folgt zu definieren ist:

a) während der Kreisel - z. B. im Lager - ruht, werden die Signale der Dioden $D_1$, $D_2$, $D_3$ gemessen und die korrespondierenden Werte $P_{1R}$, $P_{2R}$, $P_{3R}$ im Micro-Controller gespeichert;

b) während der Kreisel rollend mit beliebiger Drehrate bewegt wirdbeispielsweise beim Transport zum Einsatzort - werden noch einmal die Signale von $D_1$, $D_2$, $D_3$ gemessen und die korrespondierenden Werte $P_{1D}$, $P_{2D}$, $P_{3D}$ ebenfalls gespeichert;

c) in einem Rekursionsschema wird von dem alten - von der ursprünglichen Eichung her bekannten - Wert des Dämpfungskoeffizienten $ds_{alt}$ und den Meßwerten $P_{1R}$, $P_{2R}$, $P_{3R}$, $P_{1D}$, $P_{2D}$ $P_{3D}$ der neue Dämpfungskoeffizient berechnet und zwar:

die Sagnac-Phase $\Phi$ aus

$$\frac{P_{2D} - P_{3D}}{P_{2D} + P_{3D} - 2A/D\ ds_{alt} \cdot P_{1D}} \cdot sot\ C\ =\ tan\ \Phi$$

der Kontrastfaktor k aus

$$K\ =\ \frac{P_{2D}/P_{1D} \cdot D/ds_{alt} - A}{B\ cos\ (\Phi - c)}$$

und schließlich der Dämpfungsfaktor $ds_{neu}$ aus

$$ds_{neu}\ =\ (P_{2R}/P_{1R}) \cdot D\ /\ (A\ +\ kB\ cos\ c)$$

Nach Ersetzen $ds_{alt} = ds_{neu}$ wird dieses Rekursionsschema so lange durchlaufen, bis das Ergebnis für $ds_{neu}$ auf einen festen Wert hin konvergiert.

Der große Vorteil dieses Selbsteich-Verfahrens liegt darin, daß an die Qualität der Faserspule und der Spleiße sowie deren Langzeitstabilität nicht mehr so hohe Anforderungen wie bisher gestellt werden müssen. Für den zur Auswertung verwendeten Micro-Controller hingegen spielt es praktisch keine Rolle, welche Art von Auswerteprogramm darin implementiert wird. Damit ist die notwendige lange Lagerfähigkeit des Faserkreisels sichergestellt, ohne daß auf die Langzeitstabilität der Übertragungseigenschaften von Faserspulen angewiesen zu sein. Unsymmetrien des 3x3-Kopplers oder der Fotodioden lassen sich durch entsprechende Koeffizienten vom Fachmann berücksichtigen ohne daß sich am Eichprinzip dabei etwas ändert.

## Patentansprüche

1. Verfahren zur Selbstkorrektur eines Faserkreisels mit 3x3--Koppler zur Bestimmung der Sagnac-Phase, des Kontrastes und der Intensität der Lichtquelle durch Signalauswertung der Fotoströme ($P_1$, $P_2$, $P_3$) der Fotodioden ($D_1$, $D_2$, $D_3$) in einem dem Faserkreisel zugeordneten Auswerterechner, zum Beispeil einem Micro-Controller, **dadurch gekennzeichnet,** daß der Dämpfungskoeffizient (ds) der Faserspule mittels einer Selbsteichprozedur berechnet wird, indem

a) die Signale der Dioden ($D_1$, $D_2$, $D_3$) in Ruhelage des Kreisels gemessen und die korrespondierenden Werte $P_{1R}$, $P_{2R}$ und $P_{3R}$ im Micro-Controller gespeichert werden,

b) die Signale von $D_1$, $D_2$, $D_3$, während der Kreisel mit beliebiger Drehrate rollend bewegt wird, ein zweitesmal gemessen und die korrespondierenden Werte $P_{1D}$, $P_{2D}$ und $P_{3D}$ im Micro-Controller gespeichert werden,

c) in einem Rekursionsschema unter Verwendung des von einer ursprünglichen Eichung her bekannten Wertes des Dämpfungskoeffizienten $ds_{alt}$ und den Meßwerten $P_{1R}$, $P_{2R}$, $P_{3R}$, $P_{1D}$, $P_{2D}$ und $P_{3D}$ der neue Dämpfungskoeffizient $ds_{neu}$ ermittelt wird.

2. Verfahren nach Anspruch 1, **dadurch gekennzeichnet,** daß das Rekursionsschema gebildet wird aus:

a) der Bestimmung der Sagnac-Phase $\Phi$ durch

$$\frac{P_{2D} - P_{3D}}{P_{2D} + P_{3D} - 2A/D \cdot ds_{alt} \cdot P_{1D}} \cdot cot\ c\ =\ tan\ \Phi$$

b) der Bestimmung des Kontrastfaktors k durch

$$k\ =\ \frac{P_{2D}/P_{1D} \cdot D/ds_{alt} - A}{B \cdot cos\ (\Phi - c)}$$

c) der Bestimmung des Dämpfungsfaktors $ds_{neu}$ durch

$$ds_{neu}\ =\ (P_{2R}/P_{1R}) \cdot D\ /\ (A\ +\ k \cdot B \cdot cos\ c)$$

d) und dem Durchlaufen dieses Rekursionsschemas nach Ersetzen $ds_{neu}$ durch $ds_{alt}$ so lange, bis $ds_{neu}$auf einen festen Wert konvergiert.

3. Verfahren nach Anspruch 1 oder 2, **dadurch gekennzeichnet,** daß die Lichtquelle (L) unpolarisiertes Licht in den Anschluß 2 des 3x3-Kopplers einspeist, an dessen Anschlüsse 4 und 6 die Faserspule angeschlossen ist, während an den Anschlüssen 1, 3 und 5 die Fotodioden ($D_1$, $D_2$, $D_3$) liegen, deren Fotoströme $P_1$, $P_2$,

$P_3$ über einen A/D-Wandler dem Micro-Controller eingegeben werden, wobei die Fotoströme $P_2$ und $P_3$ vorher über eine analoge Schaltung zur Bildung der Summen- und Differenzsignale geführt worden sind.

## Claims

1. Method for self-correction of a fibre gyro with 3 x 3 coupler for determining the Sagnac phase, the contrast and the intensity of the light source by signal evaluation of the photo currents ($P_1$, $P_2$, $P_3$) of the photo diodes ($D_1$, $D_2$, $D_3$) in an evaluating computer for example a micro-controller associated with the fibre gyro, characterised in that the damping coefficient (ds) of the fibre coil is calculated by means of a self-calibrating process, in that

a) the signals of the diodes ($D_1$, $D_2$, $D_3$) are measured with the gyro in an idle position and the corresponding values $P_{1R}$, $P_{2R}$ and $P_{3R}$ are stored in the micro-controller;

b) the signals $D_1$, $D_2$, $D_3$ are measured a second time whilst the gyro is rolled at any rotary rate, and the corresponding values $P_{1D}$, $P_{2D}$ and $P_{3D}$ are stored in the micro-controller;

c) the new damping coefficient ($ds_{new}$) is determined in a recurrence scheme, using values of the damping coefficient $ds_{old}$ and the measuring values $P_{1R}$, $P_{2R}$, $P_{3R}$, $P_{1D}$, $P_{2D}$ and $P_{3D}$ known from an initial calibration.

2. Method according to claim 1, characterised in that the recurrence scheme is established through

a) determination of the Sagnac phase $\Phi$ from

$$\frac{P_{2D} - P_{3D}}{P_{2D} + P_{3D} - 2A/D \cdot ds_{old} \cdot P_{1D}} \cdot \cot c \ = \ \tan \Phi$$

b) determination of the contrast factor K from

$$K \ = \ \frac{P_{2D}/P_{1D} \cdot D/ds_{old} - A}{B \cdot \cos (\Phi - c)}$$

c) determination of the damping factor dsnew from

$$ds_{new} \ = \ (P_{2R}/P_{1R)} \cdot D \ / \ (A \ + \ k \cdot B \cdot \cos c)$$

d) and running through this recurrence scheme after having replaced $ds_{new}$ with $ds_{old}$ until $ds_{new}$ converges on a fixed value.

3. Method according to claim 1 or 2, characterised in that the light source (L) feeds unpolarised light into connection 2 of the 3 x 3 coupler to the connections 4 and 6 of which is connected the fibre coil whilst the connections 1, 3 and 5 connect to the photo diodes ($D_1$, $D_2$, $D_3$), the photo currents $P_1$, $P_2$, $P_3$ are fed via an A/D converter to the microcontroller in which respect the photo currents $P_2$ and $P_3$ are first ducted through an analog circuit for forming the sum and differential signals.

## Revendications

1. Procédé d'auto-correction d'un gyroscope à fibre optique, comprenant un coupleur 3x3 pour déterminer la phase Sagnac, le contraste et l'intensité de la source lumineuse, par exploitation des signaux des courants photoélectriques ($P_1$, $P_2$, $P_3$) des photo-diodes ($D_1$, $D_2$, $D_3$) dans un calculeur d'exploitation, par exemple un microcontrôleur, associé au gyroscope à fibre optique, caractérisé par le fait que l'on calcule le coefficient d'amortissement (ds) de la bobine de fibre optique au moyen d'une procédure d'auto-étalonnage, en

a) mesurant les signaux des diodes ($D_1$, $D_2$, $D_3$) en position de repos du gyroscope et en mémorisant les valeurs correspondantes $P_{1R}$, $P_{2R}$ et $P_{3R}$ dans le microcontrôleur,

b) en mesurant les signaux de $D_1$, $D_2$, $D_3$ une deuxième fois, pendant que le gyroscope est animé d'une rotation quelconque, et en mémorisant les valeurs correspondantes $P_{1D}$, $P_{2D}$ et $P_{3D}$ dans le microcontrôleur,

c) déterminant le nouveau coefficient d'amortissement $ds_{neu}$ dans un schéma de récurrence, avec utilisation de la valeur du coefficient d'amortissement $ds_{alt}$, connue d'un étalonnage initial, et les valeurs mesurées $P_{1R}$, $P_{2R}$, $P_{3R}$, $P_{1D}$, $P_{2D}$ et $P_{3D}$.

2. Procédé selon la revendication 1, caractérisé par le fait que le schéma de récurrence est formé de:

a) la détermination de la phase Sagnac $\Phi$ par

$$\frac{P_{2D} - P_{3D}}{P_{2D} + P_{3D} - 2A/D \cdot ds_{alt} \cdot P_{1D}} \cdot \cot c \ = \ \tan \Phi$$

b) la détermination du coefficient de constrate k par

$$k \ = \ \frac{P_{2d}/P_{1D} \cdot D/ds_{alt} - A}{B \cdot \cos (\Phi - c)}$$

c) la détermination du coefficient d'amortissement $ds_{neu}$ par

$$ds_{neu} = (P_{2R}/P_{1R}) \cdot D / (A + k \cdot B \cdot \cos c)$$

d) la répétition de ce schéma de récurrence, après remplacement de $ds_{neu}$ par $ds_{alt}$, jusqu'à ce que $ds_{neu}$ converge vers une valeur fixe.

3. Procédé selon la revendication 1 ou 2, caractérisé par le fait que la source lumineuse (L) envoie de la Lumière non polarisée dans la borne 2 du coupleur 3x3 aux bornes 4 et 6 duquel est connectée la bobine de fibre optique, tandis qu'aux bornes 1, 3 ef 5 sont connectées les phofodiodes ($D_1$, $D_2$, $D_3$) dont les courants phofoélectriques $P_1$, $P_2$, $P_3$ sont envoyés dans le microcontrôleur par l'intermédiaire d'un convertisseur A/N, les courants photoélectriques $P_2$ et $P_3$ ayant auparavant traversé un circuit analogique pour la génération des signaux de somme et de différence.

3×3-KOPPLER    FASERSPULE

D₂

1
4
L    2    5    D₁
3
6
D₃

P₁

P₂    P₃

P₂-P₃

P₂+P₃

A/D
WAND-
LER

MICRO-
CONTOL-
LER